# EUROPÄISCHE PATENTSCHRIFT

(11) **EP 0 551 256 B1**
(45) Veröffentlichungstag und Bekanntmachung des Hinweises auf die Patenterteilung: **27.07.1994**
(21) Anmeldenummer: 91903670.7
(22) Anmeldetag: 07.02.1991
(51) Int. Cl.: B60T 8/36, B60T 8/50

(54) **BREMSDRUCKREGELVORRICHTUNG**
BRAKE PRESSURE REGULATOR
REGULATEUR DE LA PRESSION DE FREINAGE

(30) Priorität: 25.05.1990 DE 4016749; 25.05.1990 DE 4016754
(43) Veröffentlichungstag der Anmeldung: 21.07.1993
(73) Patentinhaber: ITT Automotive Europe GmbH, 60488 Frankfurt (DE)
(72) Erfinder: VOLZ, Peter, D-6100 Darmstadt (DE); SCHOPPER, Bernd, D-6239 Kriftel (DE)
(86) Internationale Anmeldenummer: EP9100232
(87) Internationale Veröffentlichungsnummer: WO9118774

(56) Entgegenhaltungen:
- EP-A- 0 110 539
- EP-A- 0 171 901
- WO-A-80/01783
- DE-A- 2 210 776
- DE-A- 3 412 351
- DE-C- 3 634 349
- FR-A- 1 553 476
- FR-A- 1 593 500
- FR-A- 2 126 163
- FR-A- 2 139 140
- FR-A- 2 350 992
- FR-A- 2 507 280
- GB-A- 2 026 114
- US-A- 3 829 166

## Beschreibung

Die Erfindung betrifft eine Bremsdruckregelvorrichtung, insbesondere für Kraftfahrzeuge, nach dem Oberbegriff des Anspruchs 1.

Gattungsgemäß geht der Gegenstand der Erfindung von einem Typ von Bremsanlagen aus, wie er beispielsweise in der DE-A-37 31 603 beschrieben wird. Die Anwendung der Erfindung ist jedoch nicht auf diesen Typ begrenzt.

Derartige Bremsanlagen sind mit einem Antiblockierregelsystem und/oder Antriebsschlupfregelsystem ausgerüstet. Sie weisen eine oder zwei Hilfspumpen auf. Diese Hilfspumpen fördern während des Antiblockierregelmodus Druckmittel in einen Druckmodulator. Der Druckmodulator umfaßt mehrere hydraulische Ventile. Insbesondere sind im Druckmodulator Ein- und Auslaßventile vorgesehen, die bestimmten Radzylindern zugeordnet sind. Die Treiberstufe des elektronischen Reglers steuert diese Ein- und Auslaßventile entsprechend dem im Regler installierten Regelalgorithmus. Bei geöffnetem Auslaßventil und geschlossenem Einlaßventil wird eine Druckabbauphase im Radzylinder erzeugt. Bei geschlossenem Einlaßventil und geschlossenem Auslaßventil kommt es zu einer Druckkonstanthaltephase. Bei geöffnetem Einlaßventil und geschlossenem Auslaßventil wird eine Druckwiederaufbauphase erreicht.

Es sind weiterhin hydraulische Schaltungen beschrieben worden, bei denen das Einlaßventil eine Drosselwirkung aufweist. Siehe hierzu die DE-A-39 19 842.1.

In dieser Patentanmeldung wird eine blockiergeschützte, hydraulische Bremsanlage für ein Fahrzeug mit einem Hauptzylinder, einem Druckmittelsammler, mindestens einer Radbremse, die über eine Bremsleitung mit dem Hauptbremszylinder und über eine Rücklaufleitung mit dem Druckmittelsammler in Verbindung steht, einem elektromagnetisch betätigten Auslaßventil, das in die Rücklaufleitung eingeführt ist, und in seiner Ruhestellung die Rücklaufleitung sperrt und in seiner Schaltstellung die Rücklaufleitung freigibt, einem Drosselventil, das in die Bremsleitung eingesetzt ist und zwei Schaltstellungen aufweist, wobei in der ersten Schaltstellung eine ungedrosselte und in der zweiten Schaltstellung eine gedrosselte Verbindung zwischen der Radbremse und dem Hauptbremszylinder existiert, einer Pumpe, die aus dem Druckmittelsammler Druckmittel ansaugt und über eine Druckleitung in den Hauptzylinder fördert, dem Sensor zur Erfassung der Winkelgeschwindigkeit des abzubremsenden Rades und einer elektronischen Auswerteeinheit, die das Sensorsignal auswertet und Schaltsignale für den Pumpenantrieb und das Auslaßventil erzeugt, beschrieben.

In der genannten deutschen Patentanmeldung wird vorgeschlagen, daß das Drosselventil mittels einer Steuerleitung an den Ausgang der Pumpe angeschlossen ist, so daß der Druck am Ausgang der Pumpe das Drosselventil von der ersten in die zweite Schaltstellung setzt.

Die genannte DE-A-39 19 842.1 gilt als Stand der Technik.

Zum Stand der Technik gehört weiterhin die US-A-4090739.

Dort wird ein Bremssystem mit Antiblockierregelung beschrieben, das sich für den Einsatz in Motorräder oder kleinen Kraftfahrzeugen eignet. Das System umfaßt ein elektromagnetisch betätigbares Antiblockierregelventil, das verschiedene Positionen einnehmen kann: eine Normalposition, eine Druckabbauposition und eine Blockierposition zwischen zwei Kolben. Das Ventil wird durch eine Feder beaufschlagt, und zwar in Richtung auf die Normalposition. In dieser Position leitet das Ventil den Bremsdruck zum Radzylinder. Im Antiblockierregelmodus wird das Ventil in die Druckabbauposition verschoben. Das Ventil wird daran gehindert, aus der Druckabbauposition in die Normalposition zurückzukehren, so lange, wie der Druck vom Hauptzylinder ausgeübt wird. Das Ventil bleibt in der Blockierposition, wenn die Druckmittelversorgung blockiert ist. Es ist ein Bypass vorgesehen, der das Regelventil überbrückt. Im Bypass ist ein verengter Strömungsquerschnitt vorgesehen. Dadurch wird erreicht, daß bei dem zweiten und den folgenden Druckaufbau nur eine begrenzte Menge an Bremsflüssigkeit zur Verfügung gestellt wird.

Weitere Einzelheiten sind der genannten US-Patentschrift zu entnehmen.

Ferner ist aus der EP-A-0 171 901 eine gattungsgemäße Bremsdruckregelvorrichtung bekannt geworden. Der Schließkörper des Auslaß- und des Einlaßventils sind über einen als Fesselvorrichtung wirksamen Stift starr miteinander verbunden, so daß der Schließkörper des Auslaßventils in seiner Schließposition den Schließkörper des Einlaßventils geöffnet hält, bzw. der Schließkörper des Auslaßventils in seiner offenen Position des Schließkörper des Einlaßventils schließt. Der Schließkörper des Einlaßventils ist innerhalb eines als Strombegrenzungsventilelementes wirksamen Steuerelementes angeordnet, das wiederum im Radzylinderraum axial beweglich geführt ist. Das Strombegrenzungsventilelement wird sodann abhängig von der zwischen dem Hauptzylinderpumpenraum und dem Radzylinderraum wirksamen Druckdifferenz in eine den Mündungsquerschnitt der Hauptzylinderdruckleitung verändernde Steuerstromstellung gebracht, um einen konstanten Volumenstrom einzustellen.

Die vorbeschriebene Anordnung hat jedoch den Nachteil, daß der Bauraumbedarf des Volumenstromreglers infolge des ungünstigen Radbrems- ,Hauptzylinder- und Pumpensauganschlusses erheblich ist. Durch die der Magnetventilsteuerung abgewandte Anordnung der den Volumenstromregler grundpositionierenden Druckfeder baut der Volumenstromregler entsprechend lang. Als weiterer Nachteil erweist sich die zwischen dem Radzylinderanschluß und dem Volumenstromregler im Bremsdruckreglergehäuse eingebrachte Festblende, da hierdurch eine individuelle, an die fahrzeugspezifischen Bedürfnisse der jeweiligen Bremsanlage notwendige Abstimmungsmaßnahme und damit ein einfaches Auswechseln der Festblende verhindert wird.

Eine ähnliche Bremsdruckregelvorrichtung geht aus dem Dokument EP-A-0 110 539 hervor, mit dem Unterschied, daß keine Stromregelfunktion vorgesehen ist, so daß die Fesselvorrichtung als starres Bindeglied in Form eines Zylinderstiftes lediglich das Einlaß- und Auslaßventil in einer Aufnahmebohrung des Elektromagneten zwangsgekoppelt zu führen hat.

Aus dem Dokument WO 80/01783 geht ein Strombegrenzungsventil für eine Bremsdruckregelvorrichtung hervor. Das Strombegrenzungsventil ist als federbelastete Steuerhülse, die eine Blende aufweist in einer die Druckmittelzufuhr zur Radbremse herstellenden Schaltungsanordnung eingefügt, wobei abhängig von der Hubbewegung der Steuerhülse deren Steuerkante beispielsweise den vom Hauptzylinder bzw. der Pumpe kommenden Volumenstrom mittels eines veränderbaren Drosselquerschnitts regelt. Die Steuerkante wird aus einer radial an der Steuerhülse umlaufenden Ringnut gebildet, die mit mehreren radialen Mündungsöffnungen einer die Steuerhülse aufnehmenden Führungsbuchse korrespondiert. Jede an der Festblende der Steuerhülse hervorgerufene Druckänderung führt zwangsläufig zu einer der Druckfeder entgegengerichteten Hubbewegung der Steuerhülse im Strombegrenzungsventils und damit zur Einhaltung eines konstanten Volumenstroms an den radial verteilten Mündungsöffnungen des veränderbaren Drosselquerschnitts.

Daher liegen der Erfindung folgende Aufgaben zugrunde:

Die Herstellungskosten sollen grundsätzlich reduziert werden. Dies soll insbesondere durch die Einsparung von Magnetspulen, elektrischen Leitungen und Steckerpinnen erfolgen.

Der für den Einbau der Antiblockierregelvorrichtung notwendige Einbauraum soll verringert werden.

Die Anwendbarkeit der erfindungsgemäßen Antiblockierregelvorrichtung soll universeller sein, als dies beim Stand der Technik üblich ist. So soll eine Anwendung für sogenannte "offene" und "geschlossene" Bremssysteme mit Antiblockierregelung möglich sein. Offene Bremssysteme sind solche, bei denen sich innerhalb des Kreislaufs des Druckmittels ein gegenüber der Atmosphäre offener Druckmittelbehälter befindet. Geschlossene Systeme sind Systeme, die keinen offenen Behälter für das Druckmittel aufweisen.

Durch die Erfindungen sollen Voraussetzungen dafür geschaffen werden, daß die Bremsdruckregelvorrichtung im vorhandenen Stahlventilblock der Regelanlage integriert werden kann.

Mit dem Gegenstand der Erfindung soll es möglich sein, eine bessere Abstimmung eines Strombegrenzungsventils an die bremsenspezifischen Gegebenheiten zu erzielen. Das heißt, daß bei Erreichen eines Nennstroms dieser im wesentlichen gleich bleibt trotz Schwankungen des Druckniveaus, beziehungsweise trotz Schwankungen der Differenz der Drücke vor und hinter dem Ventil.

Mit Nennstrom ist hier gemeint, daß nicht mehr als ein definiertes Druckmittelvolumen pro Zeiteinheit im Antiblockierregelmodus dem Radzylinder zugeführt wird und zwar unabhängig von der Höhe des Drucks auf der Pumpendruckseite, beziehungsweise auf der Hauptzylinderdruckseite.

Es gehört weiterhin zu den Aufgaben der Erfindung, daß neben der Vermeidung unerwünscht hoher Radzylinderdrücke im Regelmodus ein schneller Druckabbau im Regelmodus erfolgt, wenn durch den Regelalgorithmus Druckabbau vorgeschrieben ist. Die Regelgüte soll grundsätzlich verbessert werden.

Der Erfindung liegt weiterhin die Aufgabe zugrunde, die beim Stand der Technik üblichen elektromagnetisch betätigten Stromlos-Offen-Ventile, die als Einlaßventile fungieren, einzusparen.

Mit der Erfindung sollen weiterhin Voraussetzungen dafür geschaffen werden, daß die Regelung unabhängig von Änderungen der Viskosität und damit von Änderungen der Temperatur des Druckmittels präzise erfolgt. Mit der Erfindung sollen gleichbleibende Druckgradienten während der Regelung erzielt werden können.

Weiterhin gehört es zu der Aufgabenstellung, Geräusche während des Regelmodus zu reduzieren oder zu verhindern.

Neben der Reduzierung des Aufwands für elektrische Leitungen sollen auch die Stecker verkleinert werden. Außerdem soll es durch die Erfindung möglich gemacht werden, den Aufwand für die Treiberstufe des elektronischen Reglers zu reduzieren. Im Ventilaggregat für die Regelung soll durch die Erfindung eine einfachere Kanalführung verglichen mit denjenigen des Standes der Technik möglich sein.

Die gestellten Aufgaben werden erfindungsgemäß durch die den Patentanspruch 1 kennzeichnenden Merkmale gelöst.

Zusätzlich kann vorgesehen werden, daß ein das Einlaßventil aufweisende Steuerelement, vorzugsweise eine Steuerhülse, vorgesehen ist, das einen Ventilraum in einen Hauptzylinderpumpenraum und einen Radzylinderraum trennt, das durch die Druckdifferenz zwischen Hauptzylinderpumpenraum und Radzylinderraum beweglich ist, das eine Blende mit einem verengten Strömungsquerschnitt aufweist, welcher den Hauptzylinderpumpenraum mit dem Radzylinderraum verbindet, daß bei höherem Druck im Hauptzylinderpumpenraum das Steuerelement entgegen dem Druck einer Steuerfeder in Richtung auf den Mündungsquerschnitt der Leitung zum Radzylinder bewegbar angeordnet ist, daß das Steuerelement eine Steuerkante aufweist, die den Mündungsquerschnitt zumindest teilweise überfahren kann, daß der Strömungsquerschnitt der Blende, die Position der Steuerkante in Hinsicht auf den Mündungsquerschnitt, die Federcharakteristik der Steuerfeder, die Größe und Form des Mündungsquerschnitts so ausgebildet sind, daß durch einen Schnüffelvorgang, der durch die Bewegungen der Steuerkante im Bereich des Mündungsquerschnitts verursacht wird, ein Strombegrenzungseffekt für den Radzylinder erzielt wird, der zu einem bestimmten Druckwiederaufbaugradienten im Radzylinder im Antiblockierregelmodus führt.

Eine besonders kostengünstige Ausführung besteht darin, daß das bewegliche Steuerelement als Hülse mit einer äußeren Ringnut ausgebildet ist, daß eine durch die Ringnut entstandene Kante als Steuerkante zusammen mit dem Mündungsquerschnitt der Zuleitung von Pumpe und/oder Hauptzylinder den Schnüffelvorgang ausführt.

Weiterhin wird vorgeschlagen, daß das Auslaßventil ein in an sich bekannter Weise elektromagnetisch betätigbares Stromlos-Geschlossen-Ventil (SG-Ventil) ist, das bei Stromlosigkeit des Betätigungsmagneten seine Ruhelage, die Schließposition, einnimmt.

In einem weiteren Ausführungsbeispiel wird vorgeschlagen, daß zwei über eine Leitung miteinander verbundene Radzylinderräume vorgesehen sind, daß der erste Radzylinderraum und der Hauptzylinderpumpenraum durch das Einlaßventil trennbar sind, daß der zweite Radzylinderraum und der Pumpensaugseitenraum durch das Auslaßventil trennbar sind.

Als besonders zweckmäßig hat sich herausgestellt, daß die Schließkörper mit Stiften versehen sind, und daß die Fesselvorrichtung aus einem mit dem Stift des Schließkörpers des Auslaßventils verbundenen Gehäuse, insbesondere Hülse (Kopplungsgehäuse), besteht, in der eine Druckfeder (Kopplungsfeder) untergebracht ist, die eine Spreizkraft auf die Stifte der Schließkörper und damit auf die Schließkörper selbst ausübt.

Eine weitere Ausbildung dieses Konzepts besteht darin, daß der erste Radzylinderraum und der Pumpensaugseitenraum durch eine Dichtung getrennt sind, und daß der Stift des Schließkörpers des Auslaßventils in der Dichtung zwischen ersten Radzylinderraum und Pumpensaugseitenraum dichtend geführt ist.

Zur konstruktiven Ausführung der Wirkverbindung zwischen Einlaß- und Auslaßventil wird vorgeschlagen, daß das Verbindungsaggregat zwischen den Stiften des Einlaßventils und Auslaßventils aus einem Gehäuse, vorzugsweise aus einer Koppelhülse, besteht, das mit dem Stift des Auslaßventils verbunden ist und einen Anschlag für einen stirnseitigen Bund des Stifts des Einlaßventils aufweist, daß im Gehäuse eine Druckfeder (Koppelfeder) angeordnet ist, die auf den Boden des Gehäuses und auf den stirnseitigen Bund des Stifts des Einlaßventils wirkt und somit federnd den Schließkörper des Einlaßventils und den Schließkörper des Auslaßventils auf eine bestimmte Distanz hält, die um den Hub des Bunds im Gehäuse variierbar ist.

Zusätzlich kann vorgesehen sein, daß der Schließkörper des Einlaßventils in Richtung auf seinen Ventilsitz durch eine Feder vorgespannt angeordnet ist.

Weitere Einzelheiten der Erfindung, der Aufgabenstellung und der erzielten Vorteile sind der folgenden Beschreibung von Ausführungsbeispielen der Erfindung zu entnehmen.

Diese Ausführungsbeispiele werden anhand mehrerer Figuren erläutert.

Die Figuren 1, 2, und 4 zeigen je ein Ausführungsbeispiel der Erfindung.

Figur 3 zeigt eine Variante zu den Ausführungsbeispielen nach den Figuren 1 und 2.

Bei der nachfolgenden Beschreibung der Ausführungsbeispiele der Erfindung wird von einem Stand der Technik ausgegangen, wie er sich in Form der oben zitierten Schriften darstellt.

Die Beschreibungen und die Figuren dieser Schriften können zur Erläuterung der Ausgangsbasis für die nachfolgend beschriebenen Ausführungsbeispiele der Erfindung herangezogen werden.

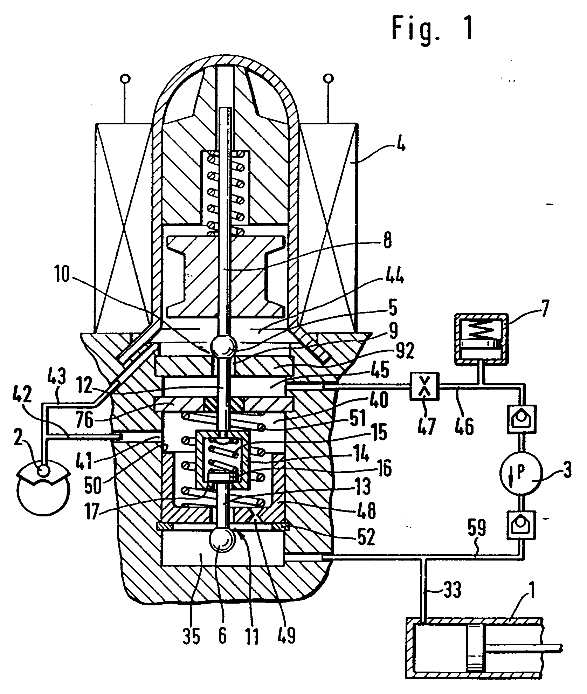

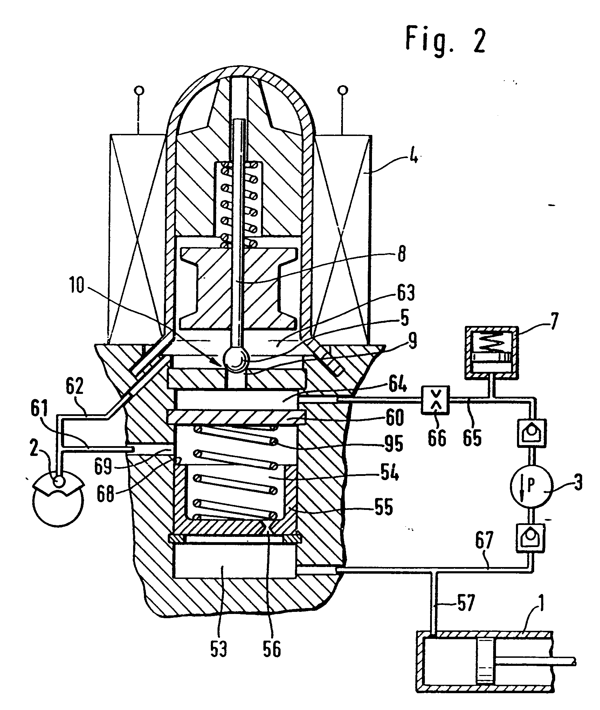

In den Figuren 1 und 2 werden zwei Ausführungsbeispiele für eine Kombination eines Einlaß- und Auslaßventils gezeigt. Das Auslaßventil ist als Stromlos-Geschlossen-Ventil ausgebildet, das Einlaßventil wird durch das Auslaßventil betätigt. Die nachfolgende Beschreibung der Ausführungsbeispiele nach den Figuren 1 und 2 kann zur Ergänzung der weiter unten folgenden Beschreibungen der weiteren Ausführungsbeispiele dienen.

In den Figuren 1 und 2 trägt der Hauptzylinder die Bezugsziffer 1, der Radzylinder ist mit 2 gekennzeichnet. Die Pumpe trägt die Bezugsziffer 3. Die Magnetspule für das Auslaßventil ist mit 4 bezeichnet. Der Schließköper des Auslaßventils ist kugelförmig ausgebildet und trägt die Bezugsziffer 5. Der Schließkörper des Einlaßventils ist ebenfalls kugelförmig ausgebildet und trägt die Bezugsziffer 6. Mit 7 ist ein Niederdruckspeicher bezeichnet.

In den Figuren 1 und 2 wird der Schließkörper 5 des Auslaßventils durch einen Zuganker 8 betätigt. Wenn die Magnetspule 4 mit Strom beaufschlagt wird, zieht der Zuganker 8 den Schließkörper nach oben und öffnet den Querschnitt 9 des Auslaßventils.

Das Auslaßventil ist in seiner Gesamtheit mit 10 bezeichnet. Der Ventilsitz des Auslaßventils ist in einer Zwischenplatte 92 angebracht. Die Gesamtheit des Einlaßventils trägt die Bezugsziffer 11.

Zwischen dem Schließkörper 5 des Auslaßventils und dem Schließkörper 6 des Einlaßventils besteht eine Kupplung über die Stifte 12, 13, das Gehäuse 14. Im Gehäuse ist eine Druckfeder 15 angeordnet, die den stirnseitigen Bund 16 des Stifts 13 des Schließkörpers 6 des Einlaßventils gegen den unteren Anschlag 17 des Gehäuses hält. Die Druckfeder 15 stützt sich dabei am Boden des Gehäuses ab.

Wie eingangs dargelegt, wird der Schließkörper des Einlaßventils durch den Schließkörper des Auslaßventils indirekt über die Bauteile 12, 14, 13 betätigt.

Im Ausführungsbeispiel ist der Pumpensaugseitenraum 45 zwischen einer, den Ventilsitz des Auslaßventils aufweisenden Zwischenplatte 92 und einer Zwischenplatte 76 angeordnet. Die Zwischenplatte 76 weist eine Dichtung auf, die den Stift 12 führt.

Bei dem Ausführungsbeispiel existieren zwei Radzylinderräume, nämlich einen ersten Radzylinderraum 40 und einen zweiten Radzylinderraum 44. Der erste Radzylinderraum ist über das Einlaßventil 11 mit dem Hauptzylinderraum 35 verbindbar. Der zweite Radzylinderraum 44, der mit dem ersten Radzylinderraum über die Leitung 43 verbunden ist, befindet sich in Bezug auf die Strömungsrichtung vor dem Auslaßventil.

Beim Ausführungsbeispiel lastet somit der Radzylinderdruck im Normalbremsmodus auf dem Schließkörper 5 des Auslaßventils. Dadurch wird der Schließkörper 5 auf den Ventilsitz gepresst, was zu einer höheren Abdichtung führt. Der Ventilsitz ist in einer Zwischenplatte 92 angebracht.

Bei dem Ausführungsbeispiel nach Figur 1 ist eine Kupplung zwischen dem Schließkörper 5 des Auslaßventils 10 und dem Schließkörper 6 des Einlaßventils 11 vorgesehen, wie sie eingangs beschrieben wurde.

In Figur 1 wird im Normalbremsmodus durch den Hauptzylinder 1 über die Leitung 33 in den Hauptzylinderpumpenraum 35 Druckmittel gefördert. Das Einlaßventil 11 ist offen, Druckmittel gelangt daher in den ersten Radzylinderraum 40 und von dort über den Mündungsquerschnitt 41 der Leitung 42 zum Radzylinder 2. Durch die Leitung 43 wird der zweite Radzylinderraum 44 mit Druckmittel gefüllt.

Im Antiblockierregelmodus wird in Figur 1 die Pumpe 3 in Betrieb gesetzt. Außerdem wird das Einlaßventil, das in seiner Gesamtheit mit 11 bezeichnet ist, geschlossen. Der Schließkörper 6 sitzt auf dem Ventilsitz auf.

Die Pumpe fördert über die Leitung 59 in den Hauptzylinderpumpenraum 35 und damit gegen die untere Stirnwand der Steuerhülse 48 und gegen die Blende 49. Die Steuerhülse 48 bewegt sich dadurch nach oben. Die Blende 49 läßt nur einen geringen Volumenstrom zu.

Gleichzeitig wird das Auslaßventil 10 geöffnet, das heißt der Schließkörper 5 wird vom Ventilsitz in der Zwischenplatte 92 abgehoben. Der Strömungsquerschnitt 9 wird freigegeben.

Druckmittel kann nunmehr aus dem Radzylinder 2 über die Leitung 43 durch den zweiten Radzylinderraum 44 in den Pumpensaugseitenraum 45 gelangen. Der Pumpensaugseitenraum ist gegenüber dem ersten Radzylinderraum durch eine Zwischenplatte 76 mit Dichtung getrennt. Der Pumpensaugseitenraum ist über die Leitung 46 mit der Saugseite der Pumpe 3 verbunden. Diese Leitung 46 weist eine Blende 47 auf. Sie ist außerdem mit dem Niederdruckspeicher 7 verbunden.

Der Strömungsquerschnitt der im Boden der Steuerhülse 48 angeordneten Blende 49, die axiale Länge der Steuerhülse, das heißt die Position der Steuerkante 50 der Steuerhülse, die Charakteristik der Steuerfeder 51, die Größe und Form des Mündungsquerschnitts 41 der Mündung der Leitung 42 zum Radzylinder sind so dimensioniert, beziehungsweise angeordnet, daß die Steuerkante 50 den Mündungsquerschnitt 41 der Leitung zum Radzylinder teilweise überfährt. Es kommt zu einem Schnüffelvorgang, der im Bereich der Steuerkante und des Mündungsquerschnitts stattfindet. Es kommt der Effekt eines Strombegrenzungsventils zustande. Das heißt, bei Erreichen eines Nennstroms (Druckmittelvolumen pro Zeiteinheit) fließt ein im wesentlichen konstanter Druckmittelstrom zum Radzylinder gleichgültig, wie hoch der Pumpen- und/oder Hauptzylinderdruck ist.

Mit 52 ist ein Anschlag bezeichnet, der die Steuerhülse in ihrer Ruhelage positioniert.

Bei dem Ausführungsbeispiel nach Figur 2 wurde eine Vereinfachung gegenüber den bisher beschriebenen Ausführungsbeispielen durchgeführt.

Beim Ausführungsbeispiel nach Figur 2 fehlt das übliche Einlaßventil mit Schließkörper und Ventilsitz. Der Hauptzylinderpumpenraum 53 ist vom ersten Radzylinderraum 54 durch die Steuerhülse 55 getrennt, die durch eine Steuerfeder 95 vorgespannt ist. Eine Verbindung zwischen dem Hauptzylinderpumpenraum und dem Radzylinderraum besteht lediglich durch die Blende 56 im Boden der Steuerhülse 55.

Im Normalbremsmodus fördert der Hauptzylinder 1 über die Leitung 57 Druckmittel in den Hauptzylinderpumpenraum 53. Durch den Druckaufbau im Hauptzylinderpumpenraum wird die Steuerhülse nach oben verschoben.

Auf diese Weise wird Druckmittel aus dem ersten Radzylinderraum, der durch die Platte 60 verschlossen ist, über die Leitung 61 in den Radzylinder 2 gepresst.

Im Antiblockierregelmodus wird die Pumpe 3 in Betrieb gesetzt und fördert Druckmittel über die Leitung 67 in den Hauptzylinderpumpenraum 53. Das Auslaßventil wird geöffnet.

Über die Leitung 62 gelangt Druckmittel aus dem Radzylinder in den zweiten Radzylinderraum 63 und von dort über das geöffnete Auslaßventil 10 in den Pumpensaugraum 64. Vom Pumpensaugraum wird Druckmittel über die Leitung 65 zur Saugseite der Pumpe gefördert. Auch hier weist die Leiung 65 eine Blende 66 auf. Die Leitung 65 ist mit dem Niederdruckspeicher verbunden.

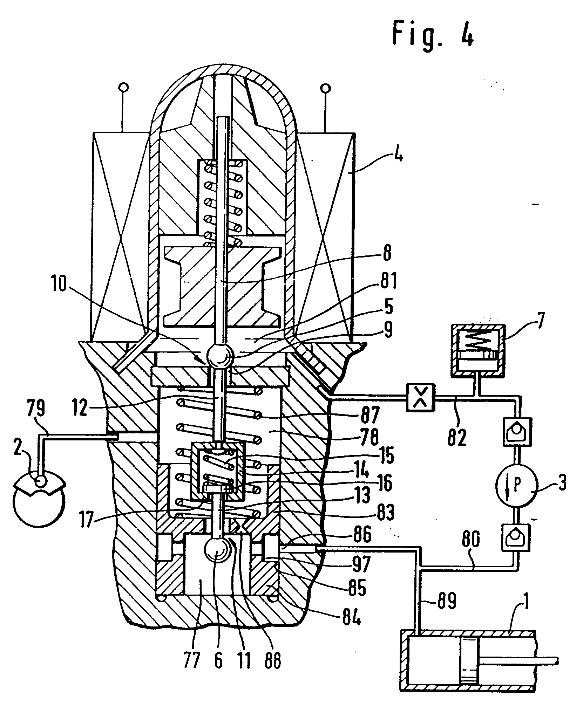

Im Antiblockierregelmodus verschiebt sich die Steuerhülse 55 durch den Pumpendruck im Hauptzylinderpumpenraum 53 weiter nach oben, so daß die Steuerkante 68 der Steuerhülse 55 zusammen mit dem Mündungsquerschnitt der Leitung 61 zum Radzylinder einen Schnüffelvorgang durchführt, ähnlich wie dies im Zusammenhang mit Figur 4 beschrieben wurde.

Auch im Ausführungsbeispiel nach Figur 2 müssen die Feder-Charakteristik der Steuerfeder, die axiale Erstreckung der Steuerhülse, das heißt die Position der Steuerkante, die Größe und Form des Mündungsquerschnitts der Zuleitung 61 zum Radzylinder, sowie der Strömungsquerschnitt der Blende 56 im Boden der Steuerhülse so aufeinander abgestimmt sein, daß es zu dem gewünschten Schnüffelvorgang im Bereich des Mündungsquerschnitts 69 der Leitung zum Radzylinder kommt.

Auch bei diesem Ausführungsbeispiel wird der Effekt eines Strombegrenzungsventils, wie er oben beschrieben wurde, durch den Schnüffelvorgang erreicht.

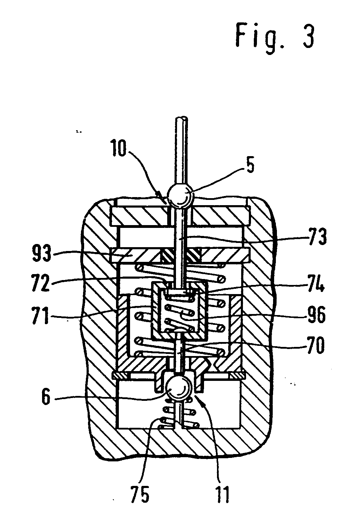

Die Figur 3 zeigt eine Alternative zur Fesselung nach Figur 1. Es besteht eine körperliche Trennung zwischen dem Schließkörper 6 des Einlaßventils 11 und dem Stift 70.

Der Stift 70 ist an seinem oberen Ende mit einer Hülse 71 versehen, die einen Anschlag 72 aufweist. In die Hülse hinein ragt der Stift 73, der mit dem Schließkörper 5 des Auslaßventils 10 verbunden ist. Der Stift 73 wird in der Zwischenplatte 93 durch eine Dichtung geführt. An seinem unteren Ende trägt dieser Stift einen Bund 74, der beim Öffnen des Auslaßventils 10, das heißt beim Anheben des Ventilkörpers 5, über den Anschlag und die Hülse den Stift 70 nach oben zieht. Zwischen dem Boden des Gehäuses 71 und dem Bund 74 ist eine Druckfeder 96 angeordnet.

Der Schließkörper 6 des Einlaßventils 11 steht unter dem Druck der Feder 75, die bei geöffnetem Auslaßventil, das heißt bei hochgezogenem Stift 70 den Schließkörper 6 des Einlaßventils gegen den Ventilsitz des Einlaßventils presst.

Es handelt sich hier also um eine wirkungsmäßig umgekehrte Konzeption im Vergleich zu der Kopplung der Figuren 1 bis 5. Bei der Figur 1 ist der Schließkörper des Einlaßventils fest mit einem Stift verbunden.

Bei dem Ausführungsbeispiel nach Figur 4 ist eine Kupplung zwischen dem Schließkörper 5 des Auslaßventils 10 und dem Schließkörper 6 des Einlaßventils 11 vorgesehen, wie sie anhand der Figur 1 beschrieben wurde.

Die Besonderheit des Ausführungsbeispiels nach Figur 4 besteht darin, daß eine Zwischenplatte mit Dichtung, wie sie in Figur 1 mit 76 bezeichnet ist, in Figur 4 fehlt.

Im Normalbremsmodus fördert der Hauptzylinder 1 über die Leitung 89 Druckmittel in den Hauptzylinderpumpenraum 77.

Über das geöffnete Einlaßventil 11 gelangt Druckmittel in den Radzylinderraum 78. Von dort wird das Druckmittel über die Leitung 79 zum Radzylinder 2 gefördert.

Im Antiblockierregelmodus wird die Pumpe 3 in Betrieb genommen. Sie fördert über die Leitung 80 Druckmittel in den Hauptzylinderpumpenraum 77.

Im Regelmodus wird wie beschrieben, das Einlaßventil 11 geschlossen und das Auslaßventil 10 geöffnet. Druckmittel kann aus dem Radzylinder 2 über die Leitung 79 den Radzylinderraum 78, über den Strömungsquerschnitt 9 des Auslaßventils, den Pumpensaugseitenraum 81, die Leitung 82 zur Saugseite der Pumpe gefördert werden.

Gleichzeitig wird durch die Pumpe im Hauptzylinderpumpenraum 77 ein Druck aufgebaut, der höher ist als der Druck im Radzylinderraum 78. Durch die entstehende Druckdifferenz bewegt sich die Hülse 83, die mit einem Fortsatz 84 und einer Steuerkante 85 versehen ist, nach oben. Die Steuerkante 85 wird durch eine Ringnut 97 im Fortsatz 84 gebildet. Die Steuerkante 85 des Fortsatzes kommt infolge der Bewegung der Hülse 83 nach oben in den Bereich des Mündungsquerschnitts 86 der Zugleitung der Pumpe 3 und des Hauptzylinders 1.

In dieser Situation kommt es zu einem Schnüffelvorgang. Die Position der Steuerkante 85, die Form, Größe und Position des Mündungsquerschnitts 86, die Charakteristik der Feder 87, der Strömungsquerschnitt der Blende 88, die sich im Boden der Hülse befindet, sind so aufeinander abgestimmt, daß es zu dem oben beschriebenen Strombegrenzungsventileffekt kommt.

## Patentansprüche

1. Bremsdruckregelvorrichtung, insbesondere für Kraftfahrzeuge, mit einem Antiblockierregelsystem (ABS) und/oder einem Antriebsschlupfregelsystem (ASR) die mit einem fluidischen, insbesondere hydraulischem Druckmittel arbeitet, bestehend aus einem Hauptzylinder (1), einem oder mehreren Radzylindern (2) für Radbremsen, einem Druckmodulator für die Veränderung des hydraulischen Drucks in den Radzylindern (2) der Radbremsen während eines Bremsdruckregelmodus, mindestens einer motorgetriebenen Pumpe (3) zur Erzeugung eines fluidischen, insbesondere hydraulischen Drucks, einem elektronischen Regler, einem dem Radzylinder (2) zugeordneten Auslaßventil (10), das in Wirkverbindung steht mit einem dem Radzylinder (2) zugeordneten Einlaßventil (11), wobei der Schließkörper (5) des Auslaßventils (10) und der Schließkörper (6) des Einlaßventils (11) über eine Fesselvorrichtung miteinander verbunden sind, die so ausgebildet und angeordnet ist, daß der Schließkörper (5) des Auslaßventils (10) in seiner Schließposition den Schließkörper (6) des Einlaßventils (11) öffnet, bzw. seine Öffnung zuläßt, und wobei der Schließkörper (5) des Auslaßventils (10) in seiner Offen-Position den Schließkörper (6) des Einlaßventils (11) schließt, bzw. seine Schließung zuläßt, mit einem innerhalb der Bremsdruckregelvorrichtung mit dem Hauptzylinder (1) und der Pumpe (3) in Verbindung stehenden Hauptzylinderpumpenraum (35), mit einem innerhalb der Bremsdruckregelvorrichtung mit dem Radzylinder (2) in Verbindung stehenden Radzylinderraum (40), mit einem innerhalb der Bremsdruckregelvorrichtung mit der Saugseite der Pumpe (3) in Verbindung stehenden Pumpensaugseitenraum (45), mit einer zwischen dem Hauptzylinderpumpenraum (35) und dem Radzylinderraum (40) vorgesehenen Öffnung, die durch das Einlaßventil (11) schließbar ist, mit einer zwischen dem Radzylinderraum (40) und dem Pumpensaugseitenraum (45) vorgesehenen Öffnung (9), die durch das Auslaßventil (10) schließbar ist, mit einer zwischen dem Hauptzylinderpumpenraum (35) und dem Radzylinderraum (40) angeordneten Drosselvorrichtung (49) für die Strömung des Druckmittels, wobei ein Strombegrenzungsventilelement vorgesehen ist, welches ein Steuerelement (48), das im Radzylinderraum (40) beweglich angeordnet ist, umfaßt und welches das Einlaßventil (11) aufweist und wobei das Steuerelement (48) durch die Druckdifferenz zwischen Hauptzylinderpumpenraum (35) und Radzylinderraum (40) so bewegt wird, daß eine am Steuerelement (48) angeordnete Steuerkante (50) den Mündungsquerschnitt (41) der Leitung (42) zum Radzylinder (2) soweit überfährt, daß im Bereich des Mündungsquerschnitts (41) und der Steuerkante (50) ein Schnüffelvorgang erzielt wird, dadurch **gekennzeichnet**, daß der Radzylinderraum (40) innerhalb des Steuerelements (48) und der Hauptzylinderraum (35) außerhalb des Steuerelemtes (48) auf der zur Steuerkante (50) abgewandten Stirnseite gelegen sind, und daß das Steuerelement (48) eine Blende (49) aufweist, die den Hauptzylinderraum (35) mit dem Radzylinderraum (40) verbindet.

2. Bremsdruckregelvorrichtung nach Anspruch 1, dadurch **gekennzeichnet**, daß ein das Einlaßventil (11) aufweisende Steuerelement, eine Steuerhülse (48), vorgesehen ist, das einen Ventilraum in den Hauptzylinderpumpenraum (35) und den Radzylinderraum (40) trennt, das durch die Druckdifferenz zwischen Hauptzylinderpumpenraum (35) und Radzylinderraum (40) beweglich ist, das eine Blende (49) mit einem verengten Strömungsquerschnitt aufweist, welcher den Hauptzylinderpumpenraum (35) mit dem Radzylinderraum (40) verbindet, daß bei höherem Druck im Hauptzylinderpumpenraum (35) das Steuerelement (48) entgegen dem Druck einer Steuerfeder (51) in Richtung auf den Mündungsquerschnitt (41) der Leitung (42) zum Radzylinder (2) bewegbar angeordnet ist, daß das Steuerelement (48) eine Steuerkante (50) aufweist, die den Mündungsquerschnitt (41) zumindest teilweise überfahren kann, daß der Strömungsquerschnitt der Blende (49), die Position der Steuerkante (50) in Hinsicht auf den Mündungsquerschnitt (41), die Federcharakteristik der Steuerfeder (51), die Größe und Form des Mündungsquerschnitts (41) so ausgebildet sind, daß durch einen Schnüffelvorgang, der durch die Bewegung der Steuerkante (50) im Bereich des Mündungsquerschnittes (41) verursacht wird, ein Strombegrenzungseffekt für den Radzylinder (2) erzielt wird, der zu einem bestimmten Druckwiederaufbaugradienten im Radzylinder im Antiblockiermodus führt.

3. Bremsdruckregelvorrichtung nach Anspruch 1 oder 2, dadurch **gekennzeichnet**, daß das bewegliche Steuerelement (83) als Hülse mit einer äußeren Ringnut (97) ausgebildet ist, daß eine durch die Ringnut entstandene Kante (85) als Steuerkante zusammen mit dem Mündungsquerschnitt (86) der Zuleitung von Pumpe (3) und/oder Hauptzylinder den Schnüffelvorgang ausführt.

4. Bremsdruckregelvorrichtung nach mindestens einem der vorhergehenden Ansprüche, dadurch **gekennzeichnet**, daß das Auslaßventil (10) ein in an sich bekannte Weise elektromagnetisch betätigbares Stromlos-Geschlossen-Ventil (SG-Ventil) ist, das bei Stromlosigkeit des Betätigungsmagneten seine Ruhelage, die Schließposition einnimmt.

5. Bremsdruckregelvorrichtung nach mindestens einem der vorhergehenden Ansprüche, dadurch **gekennzeichnet**, daß zwei über eine Leitung miteinander verbundene Radzylinderräume (40, 44) vorgesehen sind, daß der erste Radzylinderraum (40) und der Hauptzylinderpumpenraum (35) durch das Einlaßventil (11) trennbar sind, daß der zweite Radzylinderraum (44) und der Pumpensaugseitenraum (92) durch das Auslaßventil (10) trennbar sind.

6. Bremsdruckregelvorrichtung nach mindestens einem der vorhergehenden Ansprüche 1 bis 5, dadurch **gekennzeichnet**, daß aus einem mit einem Stift (12) des Schließkörpers (5) des Auslaßventils verbundenen Gehäuse (14) die Fesselvorrichtung, insbesondere in Form einer Hülse, gebildet ist, in der eine Druckfeder (15) untergebracht ist, die eine Spreizkraft auf die Stifte (12, 13) der Schließkörper und damit auf die Schließkörper (5, 6) selbst ausübt.

7. Bremsdruckregelvorrichtung nach Anspruch 5 und 6, dadurch **gekennzeichnet**, daß der erste Radzylinderraum (40) und der Pumpensaugseitenraum (45) durch eine Zwischenplatte (92) mit Dichtung getrennt sind, und daß der Stift (12) des Schließkörpers (5) des Auslaßventils (10) in der Dichtung der Zwischenplatte (92) geführt ist.

8. Bremsdruckregelvorrichtung nach mindestens einem der vorhergehenden Ansprüche, dadurch **gekennzeichnet**, daß der Schließkörper (6) des Einlaßventils (11) mit einem Stift (13) versehen ist.

9. Bremsdruckregelvorrichtung nach mindestens einem der vorhergehenden Ansprüche, dadurch **gekennzeichnet**, daß das Verbindungsaggregat zwischen den Stiften (12, 13) des Einlaßventils (11) und Auslaßventils (10) aus einem Gehäuse (14), vorzugsweise aus einer Koppelhülse besteht, das mit dem Stift (12) des Auslaßventils verbunden ist und einen Anschlag (17) für einen stirnseitigen Bund (16) des Stiftes (13) des Einlaßventils aufweist, daß im Gehäuse (14) eine Druckfeder (15) angeordnet ist, die auf den Boden des Gehäuses (14) und auf den stirnseitigen Bund (16) des Stifts (13) des Einlaßventils wirkt und somit federnd den Schließkörper (6) des Einlaßventils und den Schließkörper (5) des Auslaßventils auf eine bestimmte Distanz hält, die um den Hub des Bunds (16) des Gehäuses (14) variierbar ist.

10. Bremsdruckregelvorrichtung nach mindestens einem der vorhergehenden Ansprüche, dadurch **gekennzeichnet**, daß der Schließkörper (6) des Einlaßventils (11) in Richtung auf seinen Ventilsitz durch eine Feder (75) vorgespannt ist.

## Claims

1. A brake pressure control apparatus, in particular for automotive vehicles, with an anti-locking control system (ABS) and/or with a traction slip control system (TSS), which operates with a fluidic, in particular with a hydraulic pressure agent, being comprised of a master cylinder (1), of one or of a plurality of wheel cylinders (2) for wheel brakes, of a pressure modulator for the modulation of the hydraulic pressure within said wheel cylinders (2) of the wheel brakes in the course of a brake pressure control modus, of at least one motor-driven pump (3) for the generation of a fluidic, in particular of a hydraulic pressure, of an electronic controller, of an outlet valve (10) which is associated with said wheel cylinder (2) and which is in active connection with an inlet valve (11) being asociated with said wheel cylinder (2), the closing member (5) of said outlet valve (10) and the closing member (6) of said inlet valve (11) being connected to each other through a captivating device which is configured and arranged in such a manner that in its closing position said closing member (5) of said outlet valve (10) opens said closing member (6) of said inlet valve (11) or permits its being opened, respectively, and said closing member (5) of said outlet valve (10) in its open position closing said closing member (6) of said inlet valve (11) or permitting its being opened, respectively, with a master cylinder pump chamber (35) being in connection with the master cylinder (1) and with the pump (3) within the brake pressure control apparatus, with a wheel cylinder chamber (40) being in connection with the wheel cylinder (2) within the brake pressure control apparatus, with a pump suction-side chamber (45) being in connection with the suction side of the pump (3) within the brake pressure control apparatus, with an opening being provided between said master cylinder pump chamber (35) and said wheel cylinder chamber (40), which said opening is closable by said inlet valve (11), with an opening (9) being provided between said wheel cylinder chamber (40) and said pump suction-side chamber (45), which said opening is closable by said outlet valve (10), with a restricting apparatus (49) for the flow of the pressure agent being arranged between said master cylinder pump chamber (35) and said wheel cylinder chamber (40), a flow limiting valve element being provided which is comprised of a control element (48) being movably arranged within said wheel cylinder chamber (40) and which is furnished with said inlet valve (11), and said control element (48) being moved by the pressure differential between said master cylinder pump chamber (35) and said wheel cylinder chamber (40) in such a manner that a control edge (50) being disposed at said control element (48) passes over the cross-sectional area of the mouth (41) of the line (42) going to the wheel cylinder (2) at such an extent that in the range of said cross-sectional area of the mouth (41) and of said control edge (50) a snifting procedure is achieved, **wherein** the said wheel cylinder chamber (40) is positioned within the said control element (48) and the said master cylinder chamber (35) is positioned outside the said control element (48) on the front face-side facing away from said control edge (50), and **wherein** the said control element (48) is provided with an orifice (49) which connects the said master cylinder chamber (35) to the said wheel cylinder chamber (40).

2. A brake pressure control apparatus as claimed in claim 1, **wherein** a said control element being furnished with the said inlet valve (11), a control sleeve (48), is provided which divides a valve chamber into the said master cylinder pump chamber (35) and the said wheel cylinder chamber (40), which is movable by the pressure differential between the said master cylinder pump chamber (35) and the said wheel cylinder chamber (40), which is provided with an orifice (49) having a restricted cross-sectional area of flow connecting the said master cylinder pump chamber (35) to the said wheel cylinder chamber (40), wherein in the event of a higher pressure existing in the said master cylinder pump chamber (35) the said control element (48) is arranged so as to be movable in the direction of the said cross-sectional area of the mouth (41) of the said line (42) going to the wheel cylinder (2), contrasting the pressure of a control spring (51), wherein the said control element (48) is comprised of a said control edge (50) which can pass over the said cross-sectional area of the mouth (41) at least partially, wherein the cross-sectional area of flow of the said orifice (49), the position of the said control edge (50) in regard of the said cross-sectional area of the mouth (41), the spring characteristic of the said control spring (51), the size and the shape of the said cross-sectional area of the mouth (41) are configured such that by a snifting procedure which is caused by the movement of the said control edge (50) in the range of the said cross-sectional area of the mouth (41) a flow limiting effect for the wheel cylinder (2) is attained which leads to a determined pressure rebuilding-up gradient within the wheel cylinder in the anti-locking control modus.

3. A brake pressure control apparatus as claimed in claim 1 or in claim 2, **wherein** the said movable control element (83) is configured in the shape of a sleeve with an external annular groove (97), wherein an edge (85) which has come about by the said annular groove and which acts as a said control edge carries out the snifting procedure in conjunction with the cross-sectional area of the mouth (86) of the supply line coming from the pump (3) and/or from the master cylinder.

4. A brake pressure control apparatus as claimed in at least one of the preceding claims, **wherein** the said outlet valve (10) is a valve, closed when de-energized (NC valve), which is actuatable electromagnetically as such in prior-art manner and which in the de-energized condition of the actuating solenoid assumes its normal position, the closed position.

5. A brake pressure control apparatus as claimed in at least one of the preceding claims, **wherein** two said wheel cylinder chambers (40, 44) interconnected by a line are provided, wherein the first said wheel cylinder chamber (40) and the said master cylinder pump chamber (35) are separatable by the said inlet valve (11), wherein the second said wheel cylinder chamber (44) and the said pump suction-side chamber (92) are separatable by the said outlet valve (10).

6. A brake pressure control apparatus as claimed in at least one of the preceding claims 1 to 5, **wherein** the said captivating device, in particular in the shape of a sleeve, is formed by a housing (14) which is connected to a pin (12) of the said closing member (5) of the said outlet valve and within which a compression spring (15) is accommodated which exerts a spreading force onto the pins (12, 13) of the closing members and, thus, onto the said closing members (5, 6) themselves.

7. A brake pressure control apparatus as claimed in claims 5 and 6, **wherein** the said first wheel cylinder chamber (40) and the said pump suction-side chamber (45) are separated by an intermediate plate (92) with seal and wherein the said pin (12) of the said closing member (5) of the said outlet valve (10) is guided in the seal of the said intermediate plate (92).

8. A brake pressure control apparatus as claimed in at least one of the preceding claims, **wherein** the said closing member (6) of the said inlet valve (11) is furnished with a pin (13).

9. A brake pressure control apparatus as claimed in at least one of the preceding claims, **wherein** the connecting assembly between the said two pins (12, 13) of the said inlet valve (11) and of the said outlet valve (10) is constituted by a housing (14), preferably by a coupling sleeve, which is connected to the said pin (12) of the said outlet valve and which is furnished with a stop (17) for a front face-side collar (16) of the said pin (13) of the said inlet valve, wherein the said housing (14) a said compression spring (15) is positioned which acts upon the bottom of the said housing (14) and onto the front face-side collar (16) of the said pin (13) of the said inlet valve and, thus, elastically keeps the said closing member (6) of the said inlet valve and the said closing member (5) of the said outlet valve at a determined distance, said distance being variable for the distance of the stroke of the said collar (16) of the said housing (14).

10. A brake pressure control apparatus as claimed in at least one of the preceding claims, **wherein** the said closing member (6) of the said inlet valve (11) is prestressed in the direction of its valve seat by a spring (75).

## Revendications

1. Dispositif de régulation de pression de freinage, notamment pour véhicule automobile, comprenant un système de régulation antiblocage (ABS) et/ou un système de régulation de glissement de traction (ASR) qui fonctionnent avec un agent de pression fluide, notamment hydraulique, ce dispositif étant constitué d'un maître-cylindre (1), d'un ou plusieurs cylindres de roue (2) associés à des freins de roue, d'un modulateur de pression servant à modifier la pression hydraulique dans les cylindres de roue (2) des freins de roue pendant un mode de régulation de pression de freinage, d'au moins une pompe (3) entraînée par un moteur et servant à produire une pression fluide, notamment hydraulique, d'un régulateur électronique, d'une valve de sortie (10) associée au cylindre de roue (2) et en liaison de coopération avec une valve d'entrée (11) associée au cylindre de roue (2), l'obturateur (5) de la valve de sortie (10) et l'obturateur (6) de la valve d'entrée (11) étant reliés l'un à l'autre au moyen d'un dispositif de solidarisation qui est agencé et disposé de façon telle que, dans sa position fermée, l'obturateur (5) de la valve de sortie (10) ouvre l'obturateur (6) de la valve d'entrée (11), ou autorise son ouverture, tandis que, dans sa position ouverte, l'obturateur (5) de la valve de sortie (10) ferme l'obturateur (6) de la valve d'entrée (11), ou autorise sa fermeture, d'une chambre de pompe et de maître-cylindre (35) communiquant à l'intérieur du dispositif de régulation de pression de freinage avec le maître-cylindre (1) et la pompe (3), d'une chambre de cylindre de roue (40) communiquant dans le dispositif de régulation de pression de freinage avec le cylindre de roue (2), d'une chambre de côté d'aspiration de pompe (45) communiquant à l'intérieur du dispositif de régulation de pression de freinage avec le côté d'aspiration de la pompe (3), d'une ouverture qui est prévue entre la chambre de pompe et de maître-cylindre (35) et la chambre de cylindre de roue (40) et au moyen de laquelle la valve d'entrée (11) peut être fermée, d'une ouverture (9) qui est prévue entre la chambre de cylindre de roue (40) et la chambre de côté d'aspiration de pompe (45) et au moyen de laquelle la valve de sortie (10) peut être fermée, et d'un dispositif d'étranglement (49) destiné à l'écoulement de l'agent de pression et disposé entre la chambre de pompe et de maître-cylindre (35) et la chambre de cylindre de roue (40), tandis qu'il est prévu un élément de valve de limitation de débit qui comporte un élément de commande (48) qui est disposé d'une manière mobile dans la chambre de cylindre de roue (40) et qui comprend la valve d'entrée (11) et que l'élément de commande (48) est déplacé sous l'effet de la différence de pression entre la chambre de pompe et de maître-cylindre (35) et la chambre de cylindre de roue (40) d'une façon telle qu'un bord de commande (50) situé sur l'élément de commande (48) passe devant la section transversale de débouché (41) de la conduite (42) menant au cylindre de roue (2), d'une distance telle qu'il se produit un phénomène d'aspiration dans la zone de la section transversale de débouché (41) et du bord de commande (50), caractérisé en ce que la chambre de cylindre de roue (40) est située à l'intérieur de l'élément de commande (48) et la chambre de maître-cylindre (35) est située à l'extérieur de l'élément de commande (48), du côté frontal tourné à l'opposé du bord de commande (50), et en ce que l'élément de commande (48) comporte un étranglement (49) qui fait communiquer la chambre de maître-cylindre (35) avec la chambre de cylindre de roue (40).

2. Dispositif de régulation de pression de freinage selon la revendication 1, caractérisé en ce qu'il est prévu un élément de commande, de préférence une douille de commande (48), qui comporte la valve d'entrée (11) et divise une chambre de valve de façon à former la chambre de pompe et de maître-cylindre (35) et la chambre de cylindre de roue (40), cet élément de commande étant mobile sous l'effet de la différence de pression entre la chambre de pompe et de maître-cylindre (35) et la chambre de cylindre de roue (40) et comportant un étranglement (49) qui présente une section transversale d'écoulement rétrécie et fait communiquer la chambre de pompe et de maître-cylindre (35) avec la chambre de cylindre de roue (40), en ce que, dans le cas d'une pression assez élevée dans la chambre de pompe et de maître-cylindre (35), l'élément de commande (48) est disposé de façon à pouvoir être déplacé, à l'encontre de la pression d'un ressort de commande (51), en direction de la section transversale (41) par laquelle débouche la conduite (42) menant au cylindre de roue (2), en ce que l'élément de commande (48) comporte un bord de commande (50) qui peut passer au moins en partie devant la section transversale de débouché (41), en ce que la section transversale d'écoulement de l'étranglement (49), la position du bord de commande (50) vis-à-vis de la section transversale de débouché (41), la caractéristique élastique du ressort de commande (51) et les dimensions et la forme de la section transversale de débouché (41) sont prévues d'une façon telle qu'un phénomène d'aspiration, qui est provoqué par les déplacements du bord de commande (50) dans la zone de la section transversale de débouché (41), permet d'obtenir, pour le cylindre de roue (2), un effet de limitation de débit qui entraîne un gradient déterminé de réaugmentation de pression dans le cylindre de roue dans le mode antiblocage.

3. Dispositif de régulation de pression de freinage selon l'une des revendications 1 et 2, caractérisé en ce que l'élément de commande (83) mobile est réalisé sous la forme d'une douille comportant une gorge annulaire extérieure (97),et en ce qu'un bord (85) formé par la gorge annulaire et servant de bord de commande provoque le phénomène d'aspiration en coopération avec la section transversale de débouché (86) de la conduite d'arrivée provenant de la pompe (3) et/ou du maître-cylindre.

4. Dispositif de régulation de pression de freinage selon au moins l'une des revendications précédentes, caractérisé en ce que la valve de sortie (10) est une valve fermée en l'absence de courant (valve FAC) qui, d'une manière en soi connue, est à actionnement électromagnétique et qui, en l'absence de courant dans i'électro-aimant d'actionnement, prend sa position de repos, à savoir la position de fermeture.

5. Dispositif de régulation de pression de freinage selon au moins l'une des revendications précédentes, caractérisé en ce qu'il est prévu deux chambres de cylindre de roue (40, 44) réunies entre elles par une conduite, en ce que la première chambre de cylindre de roue (40) et la chambre de pompe et de maître-cylindre (35) sont agencées de façon à pouvoir être isolées au moyen de la valve d'entrée (11), et en ce que la deuxième chambre de cylindre de roue (44) et la chambre de côté d'aspiration de pompe (92) sont agencées de façon à pouvoir être isolées au moyen de la valve de sortie (10).

6. Dispositif de régulation de pression de freinage selon au moins l'une des revendications précédentes 1 à 5, caractérisé en ce que le dispositif de solidarisation est formé d'un boîtier (14) qui est relié à une tige (12) de l'obturateur (5) de la valve de sortie et qui se présente notamment sous la forme d'une douille dans laquelle est monté un ressort de compression (15) qui exerce une force d'écartement sur les tiges (12, 13) des obturateurs et donc sur les obturateurs (5, 6) eux-mêmes.

7. Dispositif de régulation de pression de freinage selon l'une des revendications 5 et 6, caractérisé en ce que la première chambre de cylindre de roue (40) et la chambre de côté d'aspiration de pompe (45) sont séparées par une plaque intermédiaire (92) comportant une garniture d'étanchéité, et en ce que la tige (12) de l'obturateur (5) de la valve de sortie (10) est guidée dans la garniture d'étanchéité de la plaque intermédiaire (92).

8. Dispositif de régulation de pression de freinage selon au moins l'une des revendications précédentes, caractérisé en ce que l'obturateur (6) de la valve d'entrée (11) est pourvu d'une tige (13).

9. Dispositif de régulation de pression de freinage selon au moins l'une des revendications précédentes, caractérisé en ce que l'ensemble de liaison entre les tiges (12, 13) de la valve d'entrée (11) et de la valve de sortie (10) est constitué d'un boîtier (14), de préférence d'une douille d'accouplement, qui est relié à la tige (12) de la valve de sortie et comporte une butée (17) pour une collerette frontale (16) de la tige (13) de la valve d'entrée, en ce que, dans le boîtier (14), il est disposé un ressort de compression (15) qui agit sur le fond du boîtier (14) et sur la collerette frontale (16) de la tige (13) de la valve d'entrée et maintient ainsi élastiquement l'obturateur (6) de la valve d'entrée et l'obturateur (5) de la valve de sortie à une distance déterminée qui peut varier de la valeur de la course de la collerette (16) dans le boîtier (14).

10. Dispositif de régulation de pression de freinage selon au moins l'une des revendications précédentes, caractérisé en ce que l'obturateur (6) de la valve d'entrée (11) est soumis à une précontrainte en direction de son siège de valve au moyen d'un ressort (75).
